# EUROPEAN PATENT SPECIFICATION

(11) **EP 3 909 280 B1**
(45) Date of publication and mention of the grant of the patent: **20.11.2024**
(21) Application number: 19909506.8
(22) Date of filing: 11.01.2019
(51) Int. Cl.: H04L 5/00, H04W 16/28, H04B 7/024, H04B 7/06, H04W 74/00

(54) **METHOD AND APPARATUS FOR BEAM FAILURE RECOVERY**
VERFAHREN UND VORRICHTUNG ZUR STRAHLAUSFALLWIEDERHERSTELLUNG
PROCÉDÉ ET APPAREIL DE REPRISE APRÈS DÉFAILLANCE DE FAISCEAU

(43) Date of publication of application: 17.11.2021
(73) Proprietor: Lenovo (Beijing) Limited, Beijing 100085 (CN)
(72) Inventor: LING, Wei, Beijing 102299 (CN); ZHU, Chenxi, Beijing 100085 (CN)
(74) Representative: Openshaw & Co.
(86) International application number: PCT/CN2019/071462
(87) International publication number: WO 2020/143049

(56) References cited:
- CN-A- 1 984 368
- CN-A- 108 632 837
- CN-A- 108 702 767
- US-A1- 2014 269 251
- US-A1- 2018 227 899
- HUAWEI ET AL: "Summary of remaining issues on beam failure recovery", vol. RAN WG1, no. Sanya, China; 20180416 - 20180420, 15 April 2018 (2018-04-15), XP051425934, Retrieved from the Internet <URL:http://www.3gpp.org/ftp/Meetings%5F3GPP%5FSYNC/RAN1/Docs/> [retrieved on 20180415]
- MEDIATEK INC: "Summary on Beam Failure Recovery", vol. RAN WG1, no. Chengdu, China; 20181015 - 20181019, 9 October 2018 (2018-10-09), XP051519191, Retrieved from the Internet <URL:http://www.3gpp.org/ftp/tsg%5Fran/WG1%5FRL1/TSGR1%5F94b/Docs/R1%2D1811867%2Ezip> [retrieved on 20181009]
- QUALCOMM INCORPORATED: "Beam management for NR", vol. RAN WG1, no. Gothenburg, Sweden; 20180820 - 20180824, 11 August 2018 (2018-08-11), XP051516786, Retrieved from the Internet <URL:http://www.3gpp.org/ftp/tsg%5Fran/WG1%5FRL1/TSGR1%5F94/Docs/R1%2D1809423%2Ezip> [retrieved on 20180811]
- SAMSUNG: "WI Proposal on NR MIMO Enhancements", vol. TSG RAN, no. La Jolla, USA; 20180611 - 20180614, 15 June 2018 (2018-06-15), XP051512093, Retrieved from the Internet <URL:http://www.3gpp.org/ftp/tsg%5Fran/TSG%5FRAN/TSGR%5F80/Docs/RP%2D181453%2Ezip> [retrieved on 20180615]

## Description

### TECHNICAL FIELD

Embodiments of the present disclosure generally relate to wireless communication technology, especially to a method and an apparatus for BFR (Beam Failure Recovery) in multi-TRP (Transmit-Receive Point) transmission.

### BACKGROUND

Enhancements on MIMO (Multiple-Input Multiple-Output) for NR (New Radio) have been discussed in RP-181453. The work item aims to specify the enhancements identified for NR MIMO. One of the objectives is to extend specification support in the following RANI areas, including: enhancements of MU-MIMO support; enhancements of multi-TRP/panel transmission including improved reliability and robustness with both ideal and non-ideal backhaul; enhancements of multi-beam operation; performing a study and making a conclusions in the first RANI meeting after the work item starts, and if needed, specifying CSI-RS (Channel State Information-Reference Signal) and DMRS (Demodulation Reference Signal) (both downlink and uplink) enhancement for PAPR (Peak to Average Power Ratio) reduction for one or multiple layers; and specifying enhancements to allow full power transmission in case of uplink transmission with multiple power amplifiers (assuming no change of UE power class).

Specifically, the enhancements of multi-TRP and/or panel transmission include improved reliability and robustness with both ideal and non-ideal backhaul, specifying downlink control signaling enhancement(s) for efficient support of non-coherent joint transmission; and performing a study and, if needed, specifying enhancements on uplink control signaling and/or reference signal(s) for non-coherent joint transmission.

US20180227899A1 discloses a four-step beam failure recovery procedure for multi-beam operation in wireless communication systems with beamforming.

Huawei et al, "Summary of remaining issues on beam failure recovery", R1-1803637, 3GPP TSG RAN WG1 Meeting #92bis, Sanya, China, April 16th- 20th, 2018, provides a number of proposals concerning beam failure detection.

MediaTek, "Summary on Beam Failure Recovery", R1-1811867, 3GPP TSG RAN WG1 Meeting #94bis, Chengdu, China, Oct. 15th - 19th, 2018, summarises remaining issues of Rel-15 beam failure recovery.

Qualcomm, "Beam management for NR", R1- 1809423, 3GPP TSG-RAN WG1 Meeting #94, Gothenburg, Sweden, August 20th - 24th, 2018, continues the discussion of beam management remaining issues.

Samsung, "WI Proposal on NR MIMO Enhancements", RP-181453, 3GPP TSG RAN Meeting #80, La Jolla, USA, June 11 - 14, 2018, provides a summary for a work item discussion concerning enhancements identified for NR MIMO.

### SUMMARY OF THE APPLICATION

One objective of the present disclosure is to provide a technical solution for beam failure recovery in multi-TRP transmission, which can increase the robustness of beams in a communication network. The invention is defined by the appended independent claims.

According to an embodiment of the present disclosure, a method may include: transmitting configuration information indicating at least one set of failure detection resources and at least one set of candidate resources, wherein respective one of the at least one set of failure detection resources is associated with respective one of the at least one set of the candidate resources; and receiving a physical random access channel resource, wherein the physical random access channel resource is associated with one candidate resource in one of the at least one set of candidate resources.

In an embodiment of the present disclosure, the physical random access channel resource may be one of a plurality of physical random access channel resources indicated by the configuration information, wherein each candidate resource in the at least one set of candidate resources is associated with at least one of the plurality of physical random access channel resources.

In another embodiment of the present disclosure, the configuration information may indicate at least one set of recovery search spaces, wherein respective one of the at least one set of candidate resources is associated with respective one of the at least one set of recovery search spaces. In another embodiment of the present disclosure, the configuration information may indicate a set of recovery search spaces associated with all sets of candidate resources.

In yet another embodiment of the present disclosure, the configuration information may indicate a threshold for each one of the at least one set of failure detection resources, wherein the threshold for each one of the at least one set of failure detection resources is the same or different.

In yet another embodiment of the present disclosure, the configuration information may indicate a threshold for each one of at least one set of the candidate resources, wherein the threshold for each one of at least one set of the candidate resources is the same or different.

According to another embodiment of the present disclosure, a method may include: receiving configuration information indicating at least one set of failure detection resources and at least one set of candidate resources, wherein respective one of the at least one set of failure detection resources is associated with respective one of the at least one set of the candidate resources; and transmitting a physical random access channel resource, wherein the physical random access channel resource is associated with one candidate resource in one of the at least one set of candidate resources.

According to yet another embodiment of the present disclosure, an apparatus may include: at least one transmitter that: transmits configuration information indicating at least one set of failure detection resources and at least one set of candidate resources, wherein respective one of the at least one set of failure detection resources is associated with respective one of the at least one set of the candidate resources; and at least one receiver that: receives a physical random access channel resource, wherein the physical random access channel resource is associated with one candidate resource in one of the at least one set of candidate resources.

According to yet another embodiment of the present disclosure, an apparatus may include: at least one receiver that: receives configuration information indicating at least one set of failure detection resources and at least one set of candidate resources, wherein respective one of the at least one set of failure detection resources is associated with respective one of the at least one set of the candidate resources; and at least one transmitter that: transmits a physical random access channel resource, wherein the physical random access channel resource is associated with one candidate resource in one of the at least one set of candidate resources.

Embodiments of the present disclosure provide a technical solution for beam failure recovery in multi-TRP transmission. Accordingly, embodiments of the present disclosure can increase the robustness of beams in a communication network, and facilitate the deployment and implementation of the NR.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
FIG. 1 is a schematic diagram illustrating an exemplary wireless communication system including at least one TRP according to an embodiment of the present disclosure;
FIG. 2 is a flow chart illustrating a method for BFR in multi-TRP transmission according to an embodiment of the present disclosure;
FIG. 3 is a flow chart illustrating a method for BFR in multi-TRP transmission according to another embodiment of the present disclosure;
FIG. 4 illustrates a block diagram of an apparatus for BFR in multi-TRP transmission according to an embodiment of the present disclosure;
FIG. 5 illustrates a block diagram of an apparatus for BFR in multi-TRP transmission according to another embodiment of the present disclosure; and
FIG. 6 illustrates an exemplary application scenario of implementing a method for BFR in multi-TRP transmission according to an embodiment of the present disclosure.

### DETAILED DESCRIPTION

The detailed description of the appended drawings is intended as a description of preferred embodiments of the present disclosure, and is not intended to represent the only form in which the present disclosure may be

Reference will now be made in detail to some embodiments of the present disclosure, examples of which are illustrated in the accompanying drawings.

In a wireless communication system, there may be at least one TRP. A TRP acts like a small base station. The at least one TRP may communicate with each other using a backhaul. The backhaul may be an ideal backhaul and non-ideal backhaul. The latency of the ideal backhaul may be deemed as zero, and the latency of the non-ideal backhaul may be larger than that of the ideal backhaul. The TRP can be used to serve one or more UEs (User Equipment) under the control of a base station. In different application scenario, the TRP may be described using different terms. In fact, in some application scenarios, for example, in a scenario of CoMP (Coordinated Multi-Point), the TRP can even be a base station. Persons skilled in the art should understand that as the 3GPP (3rd Generation Partnership Project) and the communication technology develop, the terminologies recited in the specification may change, which should not affect the scope of the present disclosure.

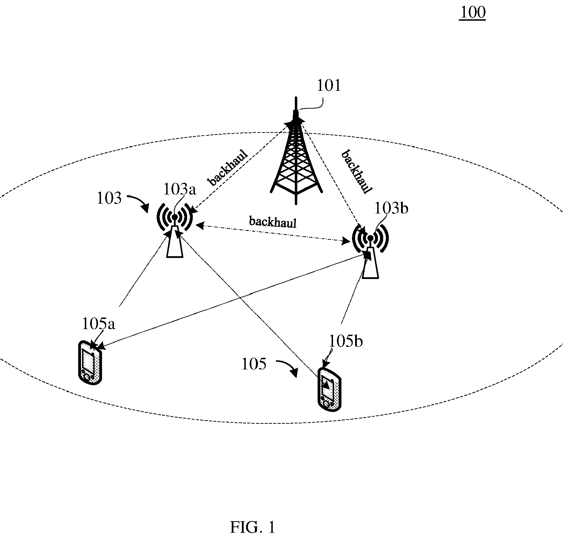

FIG. 1 is a schematic diagram illustrating an exemplary wireless communication system 100 including at least one TRP 103 according to an embodiment of the present disclosure.

Specifically, as shown in FIG. 1, there are one base station 101, two TRPs 103, e.g., a first TRP 103a, and a second TRP 103b, and two UEs 105, e.g., a first UE 105a and a second UE 105b in the exemplary wireless communication system 100. Although only one base station 101, two TRPs 103 and two UEs 105 are shown for simplicity, it should be noted that the wireless communication system 100 may further include more base stations 101, TRPs 103, and UEs 105. The base station 101 may be a gNB in some application scenarios. The TRPs 103, for example, the first TRP 103a and the second TRP 103b may be connected to the same or different base stations 101, for example using a backhaul. Each TRP 103 may serve a number of UEs 105. As an example, each of the first TRP 103a and the second TRP 103b may serve a number of mobile stations including the first UE 105a and the second UE 105b within a serving area, for example, a cell or a cell sector. The first TRP 103a and the second TRP 103b can communicate with each other, for example via a backhaul. The first UE 105a and the second UE 105b may be a computing device, a wearable device, or a mobile device, etc.

The TRP 103, for example, the first TRP 103a or the second TRP 103b may have a plurality of beams available for downlink transmission from the TRP 103 to the UE 105. During a period of time, a portion of the plurality of beams may be used as transmitting (Tx) beams for performing downlink transmission from the TRP 103 to the UE 105, and other beams may be used as candidate beams for performing downlink transmission from the TRP 103 to the UE 105. Only in the case that all the Tx beams fail, the candidate beam may be used as a new Tx beam for performing downlink transmission from the TRP 103 to the UE 105. Beams can be expressed in various manners. In some embodiments of the present disclosure, the CSI-RS (Channel State Information-Reference Signal) and SSB (Synchronization Signal Block) resources can be used to represent the beams. The CSI-RS or SSB resources representing the Tx beams and candidate beams can be indicated to the UE 105. The UE 105 can determine whether all the Tx beams of the TRP 103 have failed based on the indicated resources. In the case that all the Tx beams fail, the UE 105 can select a candidate beam and report the candidate beam to the TRP 103, that is triggering a beam failure recovery. Accordingly, the TRP 103 may use the reported candidate beam to perform downlink transmission to the UEs 105.

However, in NR R15, a beam failure recovery will be triggered by a UE 105 only in response to the failure of all the Tx beams of all the TRPs 103. In other words, the UE 105 cannot recognize a certain TRP 103 whose Tx beams all failed and cannot perform beam failure recovery for the certain TRP 103 in the case that all the Tx beams of the certain TRP 103 have failed. This will decrease the performance in multi-TRP transmission, especially in the case that multiple TRPs 103 have non-ideal backhaul among each other.

Embodiments of the present disclosure can provide a technical solution for beam failure recovery in multi-TRP transmission, which can recognize the beam failure in a certain TRP 103 and can perform beam failure recovery for the certain TRP 103 in the case that all the Tx beams of the certain TRP 103 have failed. Accordingly, embodiments of the present disclosure will increase the robustness of beams in a communication network.

More details on the embodiments of the present disclosure will be illustrated in the following text in combination with the appended drawings.

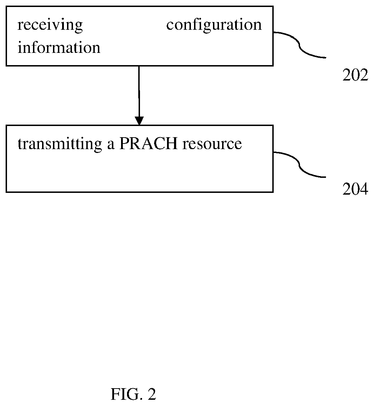

FIG. 2 is a flow chart illustrating a method for BFR in multi-TRP transmission according to an embodiment of the present disclosure. The method may be implemented by a UE 105, for example the first UE 105a or the second UE 105b in an exemplary wireless communication system 100 as shown in FIG. 1. The UE 105 can receive downlink transmission from a plurality of TRPs 103, for example the first TRP 103a and the second TRP 103b as shown in FIG. 1. Each TRP 103 may have a plurality of beams available for downlink transmission from the TRP 103 to the UE 105. During a period of time, a portion of the plurality of beams may be used as transmitting (Tx) beams for performing downlink transmission from the TRP 103 to the UE 105, and other beams may be used as candidate beams for performing downlink transmission from the TRP 103 to the UE 105. The Tx beams and candidate beams may be configured by a base station 101. Beams can be expressed in various manners. In some embodiments of the present disclosure, the CSI-RS and SSB resources can be used to represent the beams.

The Tx beams and candidate beams of each TRP 103 for a UE 105 can be indicated to the UE 105 via configuration information. As shown in FIG. 2, in step 202, the UE 105, for example, the first UE 105a or the second UE 105b may receive configuration information. In some embodiments of the present disclosure, the configuration information may be included in a plurality of high layer parameters for the UE 105 configured by a high layer by a base station 101. For example, the high layer may represent a layer higher than the PHY (physical) layer, such as a RRC (Radio Resource Control) layer.

In an embodiment of the present disclosure, the configuration information may be received from a base station 101. In another embodiment of the present disclosure, the configuration information may be received from a TRP 103, for example, the first TRP 103a or the second TRP 103b. In this case, the plurality of TRPs 103 may serve the same UE 105 and all of them under the control of the same base station 101. For example, the base station 101 may transmit the configuration information for the UE 105 to one of the plurality of TRPs 103, e.g., the first TRP 103a in FIG. 1, and the first TRP 103 transmits the received configuration information to the UE 105. Other TRPs 103, e.g. the second TRP 103b can get the configuration information for the UE 105 by backhaul between the base station 101 and the second TRP 103b or backhaul between the second TRP 103b and the first TRP 103a.

In some embodiments of the present disclosure, the Tx beams and candidate beams of the TRP 103 can be indicated to the UE 105, for example, the first UE 105a or the second UE 105b via a set of failure detection resources and a set of candidate resources respectively. Accordingly, the configuration information may indicate at least one set of failure detection resources and at least one set of candidate resources, wherein respective one of the at least one set of failure detection resources is associated with respective one of the at least one set of the candidate resources. That is, for each TRP 103, the configuration information can indicate to the UE 105 a set of failure detection resources and a set of candidate resources associated with set of failure detection resources, wherein one failure detection resource in the set of failure detection resources is associated with one Tx beam of the TRP 103 for the UE 105, and one candidate resource in the set of candidate resources is associated with one candidate beam of the TRP 103 for the UE 105. The at least one set of failure detection resources and at least one set of candidate resources are specifically configured for a single UE 105, for example, the first UE 105a or the second UE 105b.

For example, in the case that there are two TRPs 103, e.g., the first TRP 103a and the second TRP 103b jointly performing beam transmission to the UE 105, for example the first UE 105a or the second UE 105b, the configuration information may indicate two sets of failure detection resources, i.e., a first set of failure detection resources and a second set of failure detection resources and two sets of candidate resources, i.e., a first set of candidate resources and a second set of candidate resources. The first set of failure detection resources can be associated with a first set of candidate resources, and they respectively indicate Tx beams and candidate beams of the first TRP 103a. One Tx beam of the first TRP 103a can be represented by one failure detection resource in the first set of failure detection resources, and one candidate beam of the first TRP 103a can be represented by one candidate resource in the first set of candidate resource. Similarly, a second set of failure detection resources can be associated with a second set of candidate resources, and they respectively indicate Tx beams and candidate beams of the second TRP 103b. One Tx beam of the second TRP 103b can be represented by one failure detection resource in the second set of failure detection resources, and one candidate beam of the second TRP 103b can be represented by one candidate resource in the second set of candidate resource.

Each set of failure detection resources may include at least one CSI-RS resource. For example, the configuration information indicating at least one set of failure detection resources may be represented by at least one set of periodic CSI-RS resource configuration indexes, which can be configured by a high layer parameter *failureDetectionResources* as defined in TS38.213.

Each set of candidate resources may include at least one of: at least one CSI-RS resource, and at least one SS (synchronization signal) block resource. For example, the configuration information indicating at least one set of candidate resources may be represented by at least one set of periodic CSI-RS resource configuration indexes, SS block indexes, or both of CSI-RS resource configuration indexes and SS block indexes, which can be configured by a high layer parameter *candidateBeamRSList* as defined in TS38.213.

According to an embodiment of the present disclosure, the configuration information may also indicate a plurality of PRACH (physical random access channel) resources, wherein each candidate resource in the at least one set of candidate resources is associated with at least one of the plurality of physical random access channel resources. In an example of the present disclosure, one candidate resource may be associated with one PRACH resource. In an example of the present disclosure, one candidate resource may be associated with two or more PRACH resources. For example, the plurality of PRACH resources may be configured by a high layer parameter *PRACH-ResourceDedicatedBFR* as defined in TS38.213.

The UE 105 can first perform a failure detection on a set of failure detection resources that indicate Tx beams of a TRP 103. For a detected set of failure detection resources, in the case that a detection process indicates that all the Tx beams of the TRP 103 have failed, the UE 105 can detect the set of candidate resources and report a candidate resource to the corresponding TRP 103, that is, triggering a beam failure recovery. Accordingly, the corresponding TRP 103 may use a candidate beam corresponding to the reported candidate resource to perform downlink transmission to the UE 105. Thus, embodiments of present disclosure can trigger a beam failure recovery by a UE 105 in response to the failure of all the Tx beams of each TRPs 103 even in multi-TRP transmission. In other words, the UE 105 can recognize a certain TRP 103 whose Tx beams have all failed and can perform beam failure recovery for the certain TRP 103 in the case that all the Tx beams of the certain TRP 103 have failed.

Specifically, after receiving configuration information, the UE 105, for example the first UE 105a or the second UE 105b may measure the radio link quality of a failure detection resource in a set of failure detection resources.

In an embodiment of the present disclosure, the configuration information may indicate a threshold for each of the at least one set of failure detection resources, e.g. a first threshold, and the first threshold for each set of failure detection resources may be the same or different. The configuration information may indicate a threshold for each of the at least one set of the candidate resources, e.g., a second threshold, and the second threshold for each set of candidate resources may be the same or different. The first threshold may be Q_{out,LR} configured by a high layer parameter *rlmInSyncOutOfSyncThreshold* as defined in TS38.133. The second threshold may be Q_{in,LR} configured by a high layer parameter *rsrp-ThresholdSSB* as defined in TS38.133. For example, there are two sets of failure detection resources and two sets of candidate resources, the configuration information may indicate a first threshold Qi-i for the first set of failure detection resources and a first threshold Q₁₋₂ for the second set of failure detection resources, and indicate a second threshold Q₂₋₁ for the first set of candidate resource and a second threshold Q₂₋₂ for the second set of candidate resource. The first threshold Q₁₋₁ and the first threshold Q₁₋₂ can be same or different, and and the second threshold Q₂₋₁ and the second threshold Q₂₋₂ can be the same or different.

In the case that the radio link quality of each failure detection resource in the set of failure detection resources is worse than the first threshold, it means all the Tx beams of the corresponding TRP for the UE 105 failed. The UE 105 can trigger a BRF, and measure the radio link quality of each candidate resource in the associated set of candidate resources based on the second threshold. In the case that the radio link quality of each failure detection resource in a set of failure detection resources is worse than the first threshold and the radio link quality for a candidate resource in the associated set of candidate resources is larger than or equal to the second threshold, the UE 105 can select the candidate resource and report the selection by reporting a PRACH (physical random access channel) resource associated with the selected candidate resource. For example, in step 304, the UE 105, e.g., the first UE 105a or the second UE 105b may transmit the PRACH resource associated with the candidate resource selected from the set of candidate resources associated with the failed set of failure detection resources to the corresponding TRP 103.

In an exemplary scenario according to an embodiment of the present disclosure, the first TRP 103a and the second TRP 103b can jointly perform beam transmission to the first UE 105a. The first TRP 103a may have a plurality of Tx beams and a plurality of candidate beams, which may be configured by a base station 101. The second TRP 103b may also have a plurality of Tx beams and a plurality of candidate beams, which may be configured by a base station 101. Accordingly, the first UE 105a can receive configuration information indicating a first set of failure detection resources, a first set of candidate resources, a second set of failure detection resources, and a second set of candidate resources. The first set of failure detection resources and the first set of candidate resources may be associated with the first TRP 103a, and the second set of failure detection resources and the second set of candidate resources may be associated with the second TRP 103b. One Tx beam of the first TRP 103a may be represented by one failure detection resource in the first set of failure detection resources, and one candidate beam of the first TRP 103a may be represented by one candidate resource in the first set of candidate resources. Similarly, one Tx beam of the second TRP 103b may be represented by one failure detection resource in the second set of failure detection resources, and one candidate beam of the second TRP 103b may be represented by one candidate resource in the second set of candidate resources. Moreover, the configuration information may indicate a first threshold for the first set of failure detection resources, a second threshold for the second set of failure detection resources, a third threshold for the first set of candidate resource, and a fourth threshold for the second set of candidate resource. The first threshold and the second threshold may be the same or different, the third threshold and the fourth threshold may be the same or different.

Based on the received configuration information, the first UE 105a may measure the radio link quality of the failure detection resources in the first set of failure detection resources and the second set of failure detection resources respectively. In the case that the radio link quality for all the failure detection resources in the first set of failure detection resources is below a first threshold, the first UE 105a may determine that all the Tx beams of the first TRP 103a have failed. The first UE 105a may measure the radio link quality of the candidate resource in the first set of candidate resources which is associated with the first set of failure detection resources. In the case that the radio link quality of one candidate resource in the first set of candidate resources is larger than or equal to the third threshold, the first UE 105a may select the candidate resource. That means, the first UE 105a determines that the candidate beam associated with the selected candidate resource can be used as a Tx beam by the first TRP 103a for the transmission to the first UE 105a. The first UE 105a may transmit a PRACH resource associated with the selected candidate resource to the first TRP 103a. In an embodiment of the present disclosure, there may be two PRACH resources associated with one candidate resource. The first UE 105a may randomly select one PRACH resource associated with the selected candidate resource and transmit it to the first TRP 103a.

Similarly, the first UE 105a may measure the radio link quality of the failure detection resources in the second set of failure detection resources. In the case that the radio link quality for all the failure detection resources in the second set of failure detection resources is below a second threshold, the first UE 105a may determine that all the Tx beams of the second TRP 103a have failed. The first UE 105a may measure the radio link quality of the candidate resource in the second set of candidate resources which is associated with the second set of failure detection resources. In the case that the radio link quality of one candidate resource in the second set of candidate resources is larger than or equal to the fourth threshold, the first UE 105a may select the candidate resource. That means, the first UE 105a determines that the candidate beam associated the selected candidate resource can be used as a Tx beam by the second TRP 103b for the transmission to the first UE 105a. The first UE 105a may transmit a PRACH resource associated with the selected candidate resource to the second TRP 103b. In an embodiment of the present disclosure, there may be two PRACH resources associated with one candidate resource. The first UE 105a may randomly select one PRACH resource associated with the selected candidate resource and transmit it to the second TRP 103b.

In an embodiment of the present disclosure, the configuration information may also indicate at least one set of recovery search spaces. A set of search spaces may be a set of time-frequency resources for transmitting PDCCH. Accordingly, a set of recovery search spaces may be a set of time-frequency resources for transmitting the PDCCH responding to the PRACH resource in the BFR. In the case that the at least one TRPs 103 and the base station 101 have ideal backhaul among each other, the configuration information may indicate one set of recovery search spaces, and the set of recovery search spaces is associated with all the configured sets of candidate resources. In the case that the at least one TRPs 103 and the base station 101 have non-ideal backhaul among each other, the configuration information may indicate more than one sets of recovery search spaces, wherein respective one of the at least one set of candidate resources is associated with respective one of the at least one sets of recovery search spaces. In an embodiment of the present disclosure, the at least one set of recovery search spaces may be configured by a high layer parameter *recoverySearchSpaceld* as defined in TS38.213.

Specifically, in an exemplary scenario according to an embodiment of the present disclosure, the first TRP 103a and the second TRP 103b can jointly perform beam transmission to the first UE 105a. In the case that the first TRP 103a, the second TRP 103b and the base station 101 have ideal backhaul among each other, the configuration information may indicate only one set of recovery search spaces associated with both the first set of candidate resources and the second set of candidate resources. In the case that the first TRP 103a and the second TRP 103b have non-ideal backhaul among each other, the configuration information may indicate two sets of recovery search spaces, for example, a first set of candidate resources is associated with a first set of recovery search spaces and a second set of candidate resources is associated with a second set of recovery search spaces.

As shown in FIG. 2, in step 204, the UE 105, for example the first UE 105a or the second UE 105b may receive a PDCCH (physical downlink control channel) signal in a set of recovery search spaces using a receiving (Rx) beam. The Rx beam corresponds to the candidate beam represented by the candidate resource associated with the PRACH resource, and the set of recovery search spaces may be a set of time-frequency resources for transmitting the PDCCH. Since each set of candidate resources may be associated with a set of recovery search spaces, the set of recovery search spaces for receiving the PDCCH signal may be determined by the associated set of candidate resource including the candidate resource associated with the PRACH resource. Specifically, after transmitting the PRACH resource in slot n, the UE 105 may keep monitoring a PDCCH signal in the set of recovery search spaces within a window from slot n+4. The window may be configured by higher layer parameter *BeamFailureRecoveryConfig* as defined in TS38. 213.

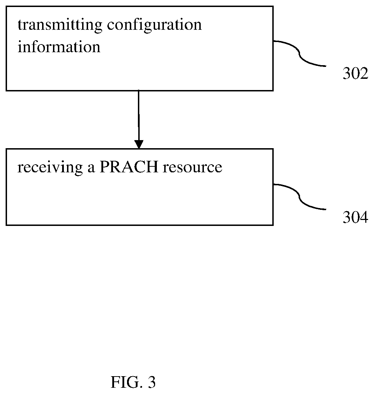

FIG. 3 is a flow chart illustrating a method for BFR in multi-TRP transmission according to another embodiment of the present disclosure. The method may be implemented in an exemplary wireless communication system 100 as shown in FIG. 1, wherein there are at least one TRPs 103, for example the first TRP 103a and the second TRP 103b jointly performing beam transmission to the UE 105, for example the first UE 105a or the second UE 105b. Each TRP 103 may have a plurality of beams available for downlink transmission from the TRP 103 to the UE 105. During a period of time, a portion of the plurality of beams may be used as transmitting (Tx) beams for performing downlink transmission from the TRP 103 to the UE 105, and other beams may be used as candidate beams for performing downlink transmission from the TRP 103 to the UE 105. The Tx beams and the candidate beams may be configured by a base station 101. Beams can be expressed in various manners. In some embodiments of the present disclosure, the CSI-RS and SSB resources can be used to represent the beams.

The Tx beams and candidate beams of each TRP 103 for a UE 105 can be indicated to the UE 105 via configuration information. As shown in FIG. 3, in step 302, the method may include transmitting configuration information to the UE 105, for example the first UE 105a or the second UE 105b. In some embodiments of the present disclosure, the configuration information may be included in a plurality of high layer parameters for the UE 105 configured by a high layer by a base station 101. For example, the high layer may represent a layer higher than the PHY layer, such as a RRC layer.

In an embodiment of the present disclosure, the configuration information may be transmitted from a base station 101 to the UE 105, for example the first UE 105a or the second UE 105b. In another embodiment of the present disclosure, the configuration information may be transmitted from a TRP 103, for example, the first TRP 103a or second TRP 103b to the UE 105. In this case, a plurality of TRPs 103 may serve the same UE 105 and all of them under the control of the same base station 101. For example, the base station 101 may transmit the configuration information for the UE 105 to one of the TRPs 103, e.g. the first TRP 103a in FIG. 1. Other TRPs 103, for example the second TRP 103b can get the configuration information for the UE 105 by backhaul between the base station 101 and the second TRP 103b or backhaul between the second TRP 103b and the first TRP 103a.

In some embodiments of the present disclosure, the Tx beams and the candidate beams of the TRP 103 may be indicated to the UE 105 via a set of failure detection resources and a set of candidate resources respectively. Accordingly, the configuration information may indicate at least one set of failure detection resources and at least one set of candidate resources, wherein respective one of the at least one set of failure detection resources is associated with respective one of the at least one set of the candidate resources. That is, for each TRP 103, the configuration information can indicate to the UE 105 a set of failure detection resources and a set of candidate resources associated with set of failure detection resources, wherein the set of failure detection resources is associated with the Tx beams of the TRP 103 for the UE 105, and the set of candidate resources associated with the candidate beams of the TRP 103 for the UE 105. The at least one set of failure detection resources and at least one set of candidate resources are specifically configured for a single UE 105, for example, the first UE 105a or the second UE 105b.

In an exemplary scenario, there are two TRPs 103, for example the first TRP 103a and the second TRP 103b jointly performing beam transmission to the same UE 105, for example the first UE 105a or second UE 105b. The configuration information may indicate two sets of failure detection resources, i.e., a first set of failure detection resources and a second set of failure detection resources and two sets of candidate resources, i.e., a first set of candidate resources and a second set of candidate resources. The first set of failure detection resources can be associated with a first set of candidate resources, and they are respectively associated with the Tx beams and candidate beams of the first TRP 103a. One Tx beam of the first TRP 103a can be represented by one failure detection resource in the first set of failure detection resources, and one candidate beam the first TRP 103a can be represented by one candidate resource in the first set of candidate resource. Similarly, a second set of failure detection resources can be associated with a second set of candidate resources, and they are respectively associated with the Tx beam and candidate beams of the second TRP 103b. One Tx beam of the second TRP 103b can be represented by one failure detection resource in the second set of failure detection resources, and one candidate beam of the second TRP 103b can be represented by one candidate resource in the second set of candidate resource.

Each set of failure detection resources may include at least one CSI-RS resource. For example, the configuration information indicating at least one set of failure detection resources may be represented by at least one set of periodic CSI-RS resource configuration indexes, which can be configured by a high layer parameter *failureDetectionResources* as defined in TS38.213.

Each set of candidate resources may include at least one of: at least one CSI-RS resource, and at least one SS block resource. For example, the configuration information indicating at least one set of candidate resources may be represented by at least one set of periodic CSI-RS resource configuration indexes, SS block indexes, or both of CSI-RS resource configuration indexes and SS block indexes, which can be configured by a high layer parameter *candidateBeamRSList* as defined in TS38.213.

According to an embodiment of the present disclosure, the configuration information may also indicate a plurality of PRACH resources, wherein each candidate resource in the at least one set of candidate resources is associated with at least one of the plurality of physical random access channel resources. In an example of the present disclosure, one candidate resource may be associated with one PRACH resource. In an example of the present disclosure, one candidate resource may be associated with two or more PRACH resources. For example, the plurality of PRACH resources may be configured by a high layer parameter *PRACH-ResourceDedicatedBFR* as defined in TS38.213.

According to another embodiment of the present disclosure, the configuration information may also indicate at least one set of recovery search spaces. In the case that the at least one TRPs 103 and the base station 101 have ideal backhaul among each other, the configuration information may indicate one set of recovery search spaces, and the set of recovery search spaces is associated with all the configured sets of candidate resources. In the case that the at least one TRPs 103 and the base station 101 have non-ideal backhaul among each other, the configuration information may indicate one set of recovery search spaces per TRP 103. Respective one of the at least one set of candidate resources is associated with respective one of the at least one set of recovery search spaces. In an embodiment of the present disclosure, the at least one set of recovery search spaces may be configured by a high layer parameter *recoverySearchSpaceld* as defined in TS38.213.

According to another embodiment of the present disclosure, the configuration information may indicate a threshold for each of the at least one set of failure detection resources, e.g. a first threshold, and the first threshold for each set of failure detection resources may be the same or different. The configuration information may indicate a threshold for each of the at least one set of the candidate resources, e.g. a second threshold, and the second threshold for each set of candidate resources may be the same or different. The first threshold may be Q_{out,LR} configured by a high layer parameter *rlmInSyncOutOfSyncThreshold* as defined in TS38.133. The second threshold may be Q_{in,LR} configured by a high layer parameter *rsrp-ThresholdSSB* as defined in TS38.133. For example, there are two sets of failure detection resources and two sets of candidate resources, the configuration information may indicate a first threshold Qi-i for the first set of failure detection resources and a first threshold Q₁₋₂ for the second set of failure detection resources, and indicate a second threshold Q₂₋₁ for the first set of candidate resource and a second threshold Q₂₋₂ for the second set of candidate resource. The first threshold Q₁₋₁ and the first threshold Q₁₋₂ can be same or different, and the second threshold Q₂₋₁ and the second threshold Q₂₋₂ can be the same or different.

In step 304, the TRP 103, for example, the first TRP 103a or the second TRP 103b may receive a PRACH resource from the UE 105. The PRACH resource may be received only in the case that radio link quality of each failure detection resource in a set of failure detection resources is worse than the first threshold and radio link quality for one candidate resource in the associated set of candidate resources is larger than or equal to the second threshold. The radio link quality may be measured by one of: layer-1 RSRP (reference signal receiving power); and layer-1 SINR (signal to interference plus noise ratio).

After receiving the PRACH resource, the TRP 103, for example, the first TRP 103a or the second TRP 103b may use a candidate beam to transmit a PDCCH signal to the UE 105 in a set of recovery search spaces, wherein the candidate beam is represented by the candidate resource associated with the PRACH resource, and the PDCCH signal corresponds to the candidate beam. Specifically, since the PRACH resource may be associated with a candidate resource and the candidate resource may indicate a candidate beam, the candidate beam transmitting the PDCCH can be indicated by the candidate resource associated with the PRACH resource. Moreover, since each set of candidate resources may be associated with a set of recovery search spaces, the set of recovery search spaces for transmitting the PDCCH signal may be determined by the associated set of candidate resource associated with the PRACH resource.

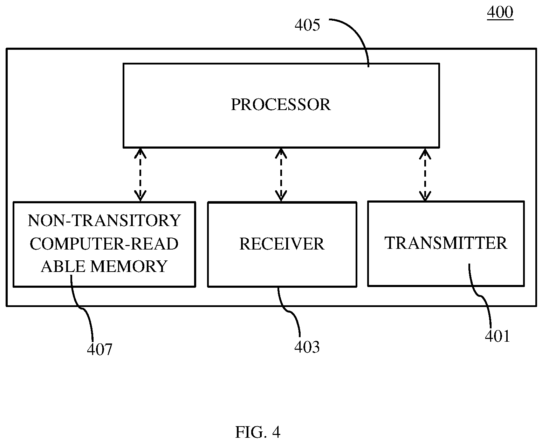

FIG. 4 illustrates a block diagram of an apparatus 400 for BFR in multi-TRP transmission according to an embodiment of the present disclosure. The apparatus 400 can be a TRP 103 as shown in FIG.1.

Referring to FIG. 4, according to an embodiment of the present disclosure, an apparatus 400 may include at least one transmitter 401 and at least one receiver 403. The at least one transmitter 401 may transmit configuration information indicating at least one set of failure detection resources and at least one set of candidate resources, wherein respective one of the at least one set of failure detection resources is associated with respective one of the at least one set of the candidate resources. The at least one receiver 403 may receive a PRACH resource, wherein the PRACH resource is associated with one candidate resource in one of the at least one set of candidate resources.

In an embodiment of the present disclosure, the PRACH resource may be one of a plurality of PRACH resources indicated by the configuration information, wherein each candidate resource in the at least one set of candidate resources is associated with at least one of the plurality of physical random access channel resources.

In another embodiment of the present disclosure, the configuration information may indicate at least one set of recovery search spaces, wherein respective one of the at least one set of candidate resources is associated with respective one of the at least one set of recovery search spaces. The configuration information may indicate only one set of recovery search spaces associated with all sets of candidate resources in another embodiment of the present disclosure.

In yet another embodiment of the present disclosure, the configuration information may indicate a threshold for each one of the at least one set of failure detection resources, wherein the threshold for each one of the at least one set of failure detection resources is the same or different.

In yet another embodiment of the present disclosure, the configuration information may indicate a threshold for each one of at least one set of the candidate resources, wherein the threshold for each one of at least one set of the candidate resources is the same or different.

According to another embodiment of the present disclosure, the apparatus 400 may have an antenna (not shown), which transmits and receives radio signals. The at least one transmitter 401 and at least one receiver 403 can be integrated in at least one transceiver coupled with the antenna. In an embodiment of the present disclosure, the apparatus 400 may also include at least one processor 405 coupled to the at least one transmitter 401 and receiver 403. The apparatus 400 may also include at least one non-transitory computer-readable memory 407, which can store computer executable instructions. The computer executable instructions can be programmed to implement a method with the at least one receiver 403, the at least one transmitter 401 and the at least one processor 405 so that carry out different tasks of a TRP 103 in according to various embodiments of the present disclosure.

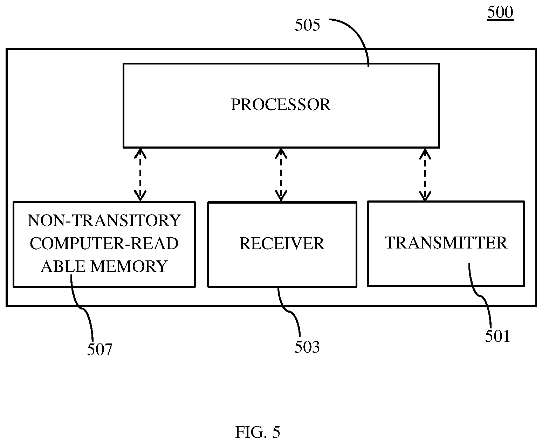

FIG. 5 illustrates a block diagram of an apparatus 500 for BFR in multi-TRP transmission according to an embodiment of the present disclosure. The apparatus 500 can be a UE 105 as shown in FIG. 1.

Referring to FIG. 5, according to an embodiment of the present disclosure, an apparatus 500 may include at least one transmitter 501 and at least one receiver 503. The at least one receiver 503 may receive configuration information indicating at least one set of failure detection resources and at least one set of candidate resources, wherein respective one of the at least one set of failure detection resources is associated with respective one of the at least one set of the candidate resources. The at least one transmitter 501 may transmits a PRACH resource, wherein the PRACH resource is associated with one candidate resource in one of the at least one set of candidate resources.

In another embodiment of the present disclosure, the apparatus 500 may have an antenna (not shown), which transmits and receives radio signals. The at least one receiver 503 and at least one transmitter 501 can be integrated in at least one transceiver coupled with the antenna. In an embodiment of the present disclosure, the apparatus may also include at least one processor 505 coupled to the at least one receiver 503 and transmitter 501. The apparatus 500 may also include at least one non-transitory computer-readable memory 507, which can store computer executable instructions. The computer executable instructions can be programmed to implement a method with the at least one receiver 501, the at least one transmitter 503 and the at least one processor 505 so that carry out different tasks of a UE 105 in according to various embodiments of the present disclosure.

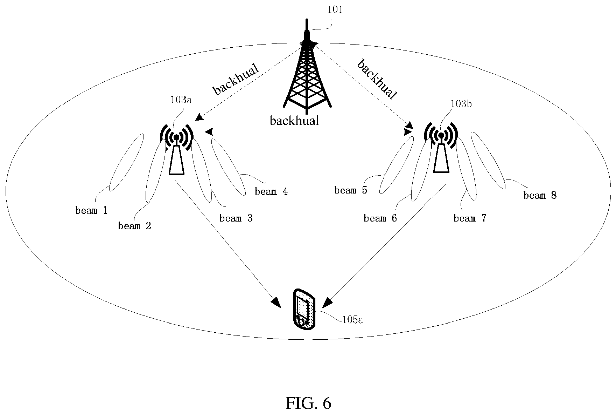

FIG. 6 illustrates an exemplary application scenario of implementing a method for BFR in multi-TRP transmission according to an embodiment of the present disclosure.

In FIG. 6, assuming two TRPs 103, for example the first TRP 103a and the second TRP 103b shown in FIG. 1 can serve the same UE 105, for example, the first UE 105a shown in FIG. 1. After beam management between the first TRP 103a and the first UE 105a, the base station 101 may configure the following to the first TRP 103a for transmission to the first UE 105a: two Tx beams, for example, beam 1 and beam 3 and two candidate beams, for example, beam 2 and beam 4. After beam management between the second TRP 103b and the first UE 105a, the base station 101 may configure the following to the second TRP 103b for transmission to the first UE 105a: two Tx beams, for example, beam 5 and beam 7 and two candidate beams, for example, beam 6 and beam 8.

One of the first TRP 103a and the second TRP 103b, for example the first TRP 103a may transmit the configuration information to the first UE 105a. The other one TRP 103, for example, the second TRP 103b can get the configuration information for the UE 105 by backhaul between the base station 101 or backhaul between the first TRP 103a and the second TRP 103b.

The configuration information may indicate a first set of failure detection resources and a first set of candidate resources, so that the Tx beams and the and the candidate beams of the first TRP 103a can be indicated to the first UE 103a . The first set of failure detection resources is associated with the first set of candidate resources. The first set of failure detection resources may include two CSI-RS resources, for example, CSI-RS resource 1 indicating beam 1 and CSI-RS resource 1 indicating beam 3. The first set of candidate resources may include two CSI-RS resources, for example, CSI-RS resource 2 indicating beam 2 and CSI-RS resource 4 indicating beam 4.

Similarly, the configuration information may indicate a second set of failure detection resources and a second set of candidate resources, so that the Tx beams and the candidate beams of the second TRP 103b can be indicated to the first UE 103a. The second set of failure detection resources is associated with the second set of candidate resources. The second set of failure detection resources may include two CSI-RS resources, for example, CSI-RS resource 5 indicating beam 5 and CSI-RS resource 7 indicating beam 7. The second set of candidate resources may include two CSI-RS resources, for example, CSI-RS resource 6 indicating beam 6 and CSI-RS resource 4 indicating beam 8.

Moreover, the configuration information may also indicate a plurality of PRACH resources. Each candidate resource may have one or more associated PRACH resources. That is, each of CSI-RS resources 2, 4, 6, and 8 may has one or more associated PRACH resources. The PRACH resources associated with different CSI-RS resources are different.

The configuration information may also indicate a threshold Q_{out,LR}' for the first set of failure detection resources, a threshold Q_{out,LR}" for the second set of failure detection resources, a threshold Q_{in,LR}' for the first set of candidate resources, a threshold Q_{in,LR}" for the second set of candidate resources.

The configuration information may also indicate at least one set of recovery search spaces. In the case that the first TRP 103a and the second TRP 103b and the base station 101 have ideal backhaul among each other, the configuration information may indicate only one set of recovery search spaces associated with both the first set of failure detection resources and the second set of failure detection resources. In the case that the first TRP 103a and the second TRP 103b have non-ideal backhaul among each other, the configuration information may indicate two set of recovery search spaces, for example, a first set of recovery search spaces associated with a first set of candidate resources and a second set of recovery search spaces associated with a first set of candidate resources.

After receiving the above configuration information, the first UE 105a may measure the radio link quality of CSI-RS resources 1 and 3 in the first set of failure detection resources and CSI-RS resources 5 and 7 in the second of failure detection resources. For example, the first UE 105a may measure the layer-1 RSRP value for CSI-RS resources 1 and 3 in the first set of failure detection resources and CSI-RS resources 5 and 7 in the second set of failure detection resources.

In the case that the first UE 105a finds that the layer-1 RSRP values for CSI-RS resources 1 and 3 in the first set of failure detection resources are both worse than the threshold Q_{out,LR}', the first UE 105a may determine that all the Tx beams of the first TRP 103a have failed. The first UE 105a may try to find a candidate beam of the first TRP 103a via selecting or determining a candidate resource in the first set of candidate resources associated with the first set of failure detection resources.

Specifically, the first UE 105a may measure the layer-1 RSRP value for CSI-RS resources 2 and 4 in the first set of candidate resources. In the case that the layer-1 RSRP value of one resource in the first set of candidate resources, for example, CSI-RS resource 4 is larger than or equal to the threshold Q_{in,LR}', the first UE 105a may transmit a PRACH resource associated with CSI-RS resource 4 to the first TRP 103a.

After receiving the PRACH resource associated with CSI-RS resource 4, the first TRP 103a may use beam 4 represented by CSI-RS resource 4 to transmit a PDCCH signal in a set of recovery search spaces associated with the first set of candidate resources including CSI-RS resource 4. In other words, according to the received PRACH resource, the first TRP 103a may determine a Tx beam and the set of the recovery search spaces so that the first TRP 103a can transmit the PDCCH signal. The first UE 105a may keep monitoring the PDCCH single in the set of recovery search spaces associated with the first set of candidate resources within a window from slot n+4 in the case that the first UE 105a transmits the PRACH resource to the first TRP 103a in slot n. The first UE 105a may use the Rx beam corresponding to beam 4 to receive the PDCCH signal.

Similarly, all the Tx beams of the second TRP 103b may also fail. In the case that the first UE 105a finds that the layer-1 RSRP values for CSI-RS resources 5 and 7 in the second set of failure detection resources are both worse than a threshold Q_{out,LR}", the first UE 105a may determine that all the Tx beams of the second TRP 103b have failed. The UE 105a may try to find a candidate beam of the second TRP 103b via selecting or determining a candidate resource in the second set of candidate resources associated with the second set of failure detection resources.

Specifically, the first UE 105a may measure the layer-1 RSRP value for CSI-RS resources 6 and 8 in the second set of candidate resources. In the case that the layer-1 RSRP value of one resource in the second set of candidate resources, for example, CSI-RS resource 8 is larger than or equal to the threshold Q_{in,LR}", the first UE 105a may transmit a PRACH resource associated with CSI-RS resource 8 to the second TRP 103b.

After receiving the PRACH resource associated with CSI-RS resource 8, the second TRP 103b may use beam 8 represented by CSI-RS resource 8 to transmit a PDCCH signal in a set of recovery search spaces associated with the second set of candidate resources including CSI-RS resource 8. In other words, according to the received PRACH resource, the second TRP 103b may determine a Tx beam and the set of the recovery search spaces so that the second TRP 103b can transmit the PDCCH signal. The first UE 105a may keep monitoring the PDCCH single in the set of recovery search spaces associated with the second set of candidate resources within a window from slot n+4 in the case that the first UE 105a transmit the PRACH resource to the second TRP 103b in slot n. The first UE 105a may use the Rx beam corresponding to beam 8 to receive the PDCCH signal.

The method according to embodiments of the present disclosure can also be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device on which resides a finite state machine capable of implementing the flowcharts shown in the figures may be used to implement the processor functions of this application. For example, an embodiment of the present disclosure provides an apparatus for emotion recognition from speech, including a processor and a memory. Computer programmable instructions for implementing a method for emotion recognition from speech are stored in the memory, and the processor is configured to perform the computer programmable instructions to implement the method for emotion recognition from speech. The method may be a method as stated above or other method according to an embodiment of the present disclosure.

An alternative embodiment preferably implements the methods according to embodiments of the present disclosure in a non-transitory, computer-readable storage medium storing computer programmable instructions. The instructions are preferably executed by computer-executable components preferably integrated with a network security system. The non-transitory, computer-readable storage medium may be stored on any suitable computer readable media such as RAMs, ROMs, flash memory, EEPROMs, optical storage devices (CD or DVD), hard drives, floppy drives, or any suitable device. The computer-executable component is preferably a processor but the instructions may alternatively or additionally be executed by any suitable dedicated hardware device. For example, an embodiment of the present disclosure provides a non-transitory, computer-readable storage medium having computer programmable instructions stored therein. The computer programmable instructions are configured to implement a method for emotion recognition from speech as stated above or other method according to an embodiment of the present disclosure.

While this application has been described with specific embodiments thereof, it is evident that many alternatives, modifications, and variations may be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the application by simply employing the elements of the independent claims. Accordingly, embodiments of the application as set forth herein are intended to be illustrative, not limiting. Various changes may be made without departing from the scope of the appended claims.

## Claims

1. A Transmit-Receive Point, TRP, (103) for beam failure recovery in a multi-TRP transmission environment, the TRP (103) comprising at least one processor (405) coupled with the at least one memory (407) and configured to cause the TRP (103) to:
transmit (302) configuration information indicating at least one set of beam failure detection resources and at least one set of candidate resources associated with the TRP (103), wherein respective ones of the at least one set of beam failure detection resources are associated with respective ones of the at least one set of the candidate resources; and
receive (304) a physical random access channel resource to indicate a candidate resource, wherein the physical random access channel resource is associated with the candidate resource in one of the at least one set of candidate resources.

2. The TRP (103) of Claim 1, wherein the physical random access channel resource is one of a plurality of physical random access channel resources indicated by the configuration information, wherein each candidate resource in the at least one set of candidate resources is associated with at least one of the plurality of physical random access channel resources.

3. The TRP (103) of Claim 1, wherein each of the at least one set of beam failure detection resources comprises at least one channel state information reference signal resource.

4. The TRP (103) of Claim 1, wherein each of the at least one set of candidate resources comprises at least one of:
at least one channel state information reference resource; and
at least one synchronization signal block resource.

5. The TRP (103) of Claim 1, wherein the configuration information indicates at least one set of recovery search spaces, wherein respective ones of the at least one set of candidate resources are associated with respective ones of the at least one set of recovery search spaces.

6. The TRP (103) of Claim 1, wherein the configuration information indicates a set of recovery search spaces associated with all sets of candidate resources.

7. The TRP (103) of Claim 5 or 6, wherein the processor (405) is configured to cause the TRP (103):
in response to receiving the physical random access channel resource, transmit a physical downlink control channel signal in a set of recovery search spaces, wherein a set of candidate resources including the candidate resource associated with the physical random access channel resource is associated with the set of recovery search spaces.

8. The TRP (103) of Claim 1, wherein the configuration information indicates a threshold for each one of the at least one set of beam failure detection resources, wherein the threshold for each one of the at least one set of beam failure detection resources is the same or different.

9. The TRP (103) of Claim 1, wherein the configuration information indicates a threshold for each one of at least one set of the candidate resources, wherein the threshold for each one of at least one set of the candidate resources is the same or different.

10. A user equipment, UE, (105) for beam failure recovery in a multi-TRP transmission environment, the UE (105) comprising at least one processor (505) coupled with the at least one memory (507) and configured to cause the UE (105) to:
receive (202) configuration information indicating at least one set of beam failure detection resources and at least one set of candidate resources associated with a respective TRP (103), wherein respective ones of the at least one set of beam failure detection resources are associated with respective ones of the at least one set of the candidate resources; and
transmit (204) a physical random access channel resource to indicate a candidate resource, wherein the physical random access channel resource is associated with the candidate resource in one of the at least one set of candidate resources.

11. The UE (105) of Claim 10, wherein:
the configuration information indicates a threshold for each one of the at least one set of beam failure detection resources, wherein the threshold for each one of the at least one set of beam failure detection resources is the same or different; or
the configuration information indicates a threshold for each one of at least one set of the candidate resources, wherein the threshold for each one of at least one set of the candidate resources is the same or different.

12. The UE (105) of Claim 10, wherein the processor (505) is configured to cause the UE (105) to:
measure radio link quality of a beam failure detection resource in the respective one of the at least one set of beam failure detection resources;
in the case that the radio link quality of each beam failure detection resource in the respective one of the at least one set of beam failure detection resources is worse than a first threshold, measure the radio link quality of each candidate resource in the associated set of candidate resources,
and optionally:
in the case that the radio link quality of each beam failure detection resource in the respective one of the at least one set of beam failure detection resources is worse than the first threshold and the radio link quality for the one candidate resource in the associated set of candidate resources is larger than or equal to a second threshold, transmit the physical random access channel resource associated with the one candidate resource in the associated set of candidate resources.

13. A processor (505) for wireless communication by a user equipment, UE, (105) for beam failure recovery in a multi-TRP transmission environment, the processor (505) being configured to cause the UE (105) to:
receive (202) configuration information indicating at least one set of beam failure detection resources and at least one set of candidate resources associated with a respective TRP (103), wherein respective ones of the at least one set of beam failure detection resources are associated with respective ones of the at least one set of the candidate resources; and
transmit (204) a physical random access channel resource to indicate a candidate resource, wherein the physical random access channel resource is associated with the candidate resource in one of the at least one set of candidate resources.

14. A method performed by a Transmit-Receive Point, TRP, (103) for beam failure recovery in a multi-TRP transmission environment, the method comprising:
transmitting configuration information indicating at least one set of beam failure detection resources and at least one set of candidate resources associated with the TRP (103), wherein respective ones of the at least one set of beam failure detection resources are associated with respective ones of the at least one set of the candidate resources; and
receiving a physical random access channel resource to indicate a candidate resource, wherein the physical random access channel resource is associated with the candidate resource in one of the at least one set of candidate resources.

15. A method performed by a user equipment (105, 500), UE, for beam failure recovery in a multi-TRP transmission environment, the method comprising:
receiving configuration information indicating at least one set of beam failure detection resources and at least one set of candidate resources associated with a respective TRP (103), wherein respective ones of the at least one set of beam failure detection resources are associated with respective ones of the at least one set of the candidate resources; and
transmitting a physical random access channel resource to indicate a candidate resource, wherein the physical random access channel resource is associated with the candidate resource in one of the at least one set of candidate resources.

## Patentansprüche

1. Sende-Empfangs-Punkt, TRP, (103) für eine Strahlausfallwiederherstellung in einer Multi-TRP-Sendungsumgebung, der TRP (103) umfassend mindestens einen Prozessor (405), der mit dem mindestens einen Speicher (407) gekoppelt ist und konfiguriert ist, um den TRP (103) zu veranlassen zum:
Senden (302) von Konfigurationsinformationen, die mindestens einen Satz von Strahlausfallerkennungsressourcen und mindestens einen Satz von Kandidatenressourcen angeben, die mit dem TRP (103) verknüpft sind, wobei jeweilige des mindestens einen Satzes von Strahlausfallerkennungsressourcen mit jeweiligen des mindestens einen Satzes von Kandidatenressourcen verknüpft sind; und
Empfangen (304) einer physischen Direktzugriffskanalressource, um eine Kandidatenressource anzugeben, wobei die physische Direktzugriffskanalressource mit der Kandidatenressource in einem des mindestens einen Satzes von Kandidatenressourcen verknüpft ist.

2. TRP (103) nach Anspruch 1, wobei die physische Direktzugriffskanalressource eine von einer Vielzahl von physischen Direktzugriffskanalressourcen ist, die durch die Konfigurationsinformationen angegeben werden, wobei jede Kandidatenressource in dem mindestens einen Satz von Kandidatenressourcen mit mindestens einer der Vielzahl von physischen Direktzugriffskanalressourcen verknüpft ist.

3. TRP (103) nach Anspruch 1, wobei jeder des mindestens einen Satzes von Strahlausfallerkennungsressourcen mindestens eine Kanalzustandsinformationenreferenzsignalressource umfasst.

4. TRP (103) nach Anspruch 1, wobei jeder des mindestens einen Satzes von Kandidatenressourcen mindestens eines umfasst von:
mindestens einer Kanalstatusinformationenreferenzressource; und
mindestens einer Synchronisationssignalblockressource.

5. TRP (103) nach Anspruch 1, wobei die Konfigurationsinformationen mindestens einen Satz von Wiederherstellungssuchräumen angeben, wobei jeweilige des mindestens einen Satzes von Kandidatenressourcen mit jeweiligen des mindestens einen Satzes von Wiederherstellungssuchräumen verknüpft sind.

6. TRP (103) nach Anspruch 1, wobei die Konfigurationsinformationen einen Satz von Wiederherstellungssuchräumen angeben, die mit allen Sätzen von Kandidatenressourcen verknüpft sind.

7. TRP (103) nach Anspruch 5 oder 6, wobei der Prozessor (405) konfiguriert ist, um den TRP (103) zu veranlassen zum:
als Reaktion auf ein Empfangen der physischen Direktzugriffskanalressource, Senden eines physisches Downlink-Steuerkanalsignals in einem Satz von Wiederherstellungssuchräumen, wobei ein Satz von Kandidatenressourcen, der die Kandidatenressource einschließt, die mit der physischen Direktzugriffskanalressource verknüpft ist, mit dem Satz von Wiederherstellungssuchräumen verknüpft ist.

8. TRP (103) nach Anspruch 1, wobei die Konfigurationsinformationen einen Schwellenwert für jeden einen des mindestens einen Satzes von Strahlausfallerkennungsessourcen angeben, wobei der Schwellenwert für jeden einen des mindestens einen Satzes von Strahlausfallerkennungsessourcen gleich oder unterschiedlich ist.

9. TRP (103) nach Anspruch 1, wobei die Konfigurationsinformationen einen Schwellenwert für jeden einen mindestens eines Satzes der Kandidatenressourcen angeben, wobei der Schwellenwert für jeden einen mindestens eines Satzes der Kandidatenressourcen gleich oder unterschiedlich ist.

10. Benutzereinrichtung, UE, (105) für die Strahlausfallwiederherstellung in einer Multi-TRP-Sendungsumgebung, die UE (105) umfassend mindestens einen Prozessor (505), der mit dem mindestens einen Speicher (507) gekoppelt ist und konfiguriert ist, um die UE (105) zu veranlassen zum:
Empfangen (202) von Konfigurationsinformationen, die mindestens einen Satz von Strahlausfallerkennungsressourcen und mindestens einen Satz von Kandidatenressourcen angeben, die mit einem jeweiligen TRP (103) verknüpft sind, wobei jeweilige des mindestens einen Satzes von Strahlausfallerkennungsressourcen mit jeweiligen des mindestens einen Satzes von Kandidatenressourcen verknüpft sind; und
Senden (204) einer physischen Direktzugriffskanalressource, um eine Kandidatenressource anzugeben, wobei die physische Direktzugriffskanalressource mit der Kandidatenressource in einem des mindestens einen Satzes von Kandidatenressourcen verknüpft ist.

11. UE (105) nach Anspruch 10, wobei:
die Konfigurationsinformationen einen Schwellenwert für jeden einen des mindestens einen Satzes von Strahlausfallerkennungsressourcen angeben, wobei der Schwellenwert für jeden einen des mindestens einen Satzes von Strahlausfallerkennungsressourcen gleich oder unterschiedlich ist; oder
die Konfigurationsinformationen einen Schwellenwert für jeden einen mindestens eines Satzes der Kandidatenressourcen angeben, wobei der Schwellenwert für jeden einen mindestens eines Satzes der Kandidatenressourcen gleich oder unterschiedlich ist.

12. UE (105) nach Anspruch 10, wobei der Prozessor (505) konfiguriert ist, um die UE (105) zu veranlassen zum:
Messen einer Funkverbindungsqualität einer Strahlausfallerkennungsressource in dem jeweiligen des mindestens einen Satzes von Strahlausfallerkennungsressourcen;
in dem Fall, dass die Funkverbindungsqualität jeder Strahlausfallerkennungsressource in dem jeweiligen des mindestens einen Satzes von Strahlausfallerkennungsressourcen schlechter als ein erster Schwellenwert ist, Messen der Funkverbindungsqualität jeder Kandidatenressource in dem verknüpften Satz von Kandidatenressourcen,
und optional:
in dem Fall, dass die Funkverbindungsqualität jeder Strahlausfallerkennungsressource in dem jeweiligen des mindestens einen Satzes von Strahlausfallerkennungsressourcen schlechter als der erste Schwellenwert ist und die Funkverbindungsqualität für die eine Kandidatenressource in dem verknüpften Satz von Kandidatenressourcen größer als oder gleich einem zweiten Schwellenwert ist, Senden der physischen Direktzugriffskanalressource, die mit der einen Kandidatenressource in dem verknüpften Satz von Kandidatenressourcen verknüpft ist.

13. Prozessor (505) für die drahtlose Kommunikation durch eine Benutzereinrichtung, UE, (105) für die Strahlausfallwiederherstellung in einer Multi-TRP-Sendungsumgebung, wobei der Prozessor (505) konfiguriert ist, um die UE (105) zu veranlassen zum:
Empfangen (202) von Konfigurationsinformationen, die mindestens einen Satz von Strahlausfallerkennungsressourcen und mindestens einen Satz von Kandidatenressourcen angeben, die mit einem jeweiligen TRP (103) verknüpft sind, wobei jeweilige des mindestens einen Satzes von Strahlausfallerkennungsressourcen mit jeweiligen des mindestens einen Satzes von Kandidatenressourcen verknüpft sind; und
Senden (204) einer physischen Direktzugriffskanalressource, um eine Kandidatenressource anzugeben, wobei die physische Direktzugriffskanalressource mit der Kandidatenressource in einem des mindestens einen Satzes von Kandidatenressourcen verknüpft ist.

14. Verfahren, das durch einen Sende-Empfangs-Punkt, TRP, (103) für die Strahlausfallwiederherstellung in einer Multi-TRP-Sendungsumgebung durchgeführt wird, das Verfahren umfassend:
Senden von Konfigurationsinformationen, die mindestens einen Satz von Strahlausfallerkennungsressourcen und mindestens einen Satz von Kandidatenressourcen angeben, die mit dem TRP (103) verknüpft sind, wobei jeweilige des mindestens einen Satzes von Strahlausfallerkennungsressourcen mit jeweiligen des mindestens einen Satzes der Kandidatenressourcen verknüpft sind; und
Empfangen einer physischen Direktzugriffskanalressource, um eine Kandidatenressource anzugeben, wobei die physische Direktzugriffskanalressource mit der Kandidatenressource in einem des mindestens einen Satzes von Kandidatenressourcen verknüpft ist.

15. Verfahren, das durch eine Benutzerausrüstung (105, 500), UE, für die Strahlausfallwiederherstellung in einer Multi-TRP-Sendungsumgebung durchgeführt wird, das Verfahren umfassend:
Empfangen von Konfigurationsinformationen, die mindestens einen Satz von Strahlausfallerkennungsressourcen und mindestens einen Satz von Kandidatenressourcen angeben, die mit einem jeweiligen TRP (103) verknüpft sind, wobei jeweilige des mindestens einen Satzes von Strahlausfallerkennungsressourcen mit jeweiligen des mindestens einen Satzes der Kandidatenressourcen verknüpft sind; und
Senden einer physischen Direktzugriffskanalressource, um eine Kandidatenressource anzugeben, wobei die physische Direktzugriffskanalressource mit der Kandidatenressource in einem des mindestens einen Satzes von Kandidatenressourcen verknüpft ist.

## Revendications

1. Point d'émission-réception,TRP (103), pour la reprise sur défaillance de faisceau dans un environnement de transmission multi-TRP, le TRP (103) comprenant au moins un processeur (405) couplé à l'au moins une mémoire (407) et configuré pour amener le TRP (103) à :
transmettre (302) des informations de configuration indiquant au moins un ensemble de ressources de détection de défaillance de faisceau et au moins un ensemble de ressources candidates associées au TRP (103), dans lequel les ressources respectives de l'au moins un ensemble de ressources de détection de défaillance de faisceau sont associées aux ressources respectives de l'au moins un ensemble de ressources candidates ; et
recevoir (304) une ressource de canal d'accès physique aléatoire pour indiquer une ressource candidate, dans lequel la ressource de canal d'accès physique aléatoire est associée à la ressource candidate dans l'au moins un ensemble de ressources candidates.

2. TRP (103) selon la revendication 1, dans lequel la ressource de canal d'accès physique aléatoire fait partie d'une pluralité de ressources de canal d'accès physique aléatoire indiquées par les informations de configuration, dans lequel chaque ressource candidate dans l'au moins un ensemble de ressources candidates est associée à au moins une de la pluralité de ressources de canal d'accès physique aléatoire.

3. TRP (103) selon la revendication 1, dans lequel chacune de l'au moins un ensemble de ressources de détection de défaillance de faisceau comprend au moins une ressource de signal de référence d'informations d'état de canal.

4. TRP (103) selon la revendication 1, dans lequel chacune de l'au moins un ensemble de ressources candidates comprend au moins l'un parmi :
au moins une ressource de référence d'informations d'état de canal ; et
au moins une ressource de bloc de signaux de synchronisation.

5. TRP (103) selon la revendication 1, dans lequel les informations de configuration indiquent au moins un ensemble d'espaces de recherche de reprise, dans lequel les ressources respectives de l'au moins un ensemble de ressources candidates sont associées aux espaces respectifs de l'au moins un ensemble d'espaces de recherche de reprise.

6. TRP (103) selon la revendication 1, dans lequel les informations de configuration indiquent un ensemble d'espaces de recherche de reprise associés à tous les ensembles de ressources candidates.

7. TRP (103) selon la revendication 5 ou 6, dans lequel le processeur (405) est en outre configuré pour amener le TRP (103) à :
en réponse à la réception de la ressource de canal d'accès physique aléatoire, transmettre un signal de canal de commande de liaison descendante physique dans un ensemble d'espaces de recherche de récupération, dans lequel un ensemble de ressources candidates comportant la ressource candidate associée à la ressource de canal d'accès aléatoire physique est associé à l'ensemble d'espaces de recherche de reprise.

8. TRP (103) selon la revendication 1, dans lequel les informations de configuration indiquent un seuil pour chacune de l'au moins un ensemble de ressources de détection de défaillance de faisceau, dans lequel le seuil pour chacune de l'au moins un ensemble de ressources de détection de défaillance de faisceau est identique ou différent.

9. TRP (103) selon la revendication 1, dans lequel les informations de configuration indiquent un seuil pour chacune de l'au moins un ensemble de ressources candidates, dans lequel le seuil pour chacune de l'au moins un ensemble de ressources candidates est identique ou différent.

10. Équipement utilisateur,UE (105), pour la reprise sur défaillance de faisceau dans un environnement de transmission multi-TRP, l'UE (105) comprenant au moins un processeur (505) couplé à au moins une mémoire (507) et configuré pour amener l'UE (105) à :
recevoir (202) des informations de configuration indiquant au moins un ensemble de ressources de détection de défaillance de faisceau et au moins un ensemble de ressources candidates associées à un TRP (103) respectif, dans lequel les ressources respectives de l'au moins un ensemble de ressources de détection de défaillance de faisceau sont associées aux ressources respectives de l'au moins un ensemble de ressources candidates ; et
transmettre (204) une ressource de canal d'accès physique aléatoire pour indiquer une ressource candidate, dans lequel la ressource de canal d'accès physique aléatoire est associée à la ressource candidate dans l'au moins un ensemble de ressources candidates.

11. UE (105) selon la revendication 10, dans lequel :
les informations de configuration indiquent un seuil pour chacune de l'au moins un ensemble de ressources de détection de défaillance de faisceau, dans lequel le seuil pour chacune de l'au moins un ensemble de ressources de détection de défaillance de faisceau est identique ou différent ; ou
les informations de configuration indiquent un seuil pour chacune de l'au moins un ensemble de ressources candidates, dans lequel le seuil pour chacune de l'au moins un ensemble de ressources candidates est identique ou différent.

12. UE (105) selon la revendication 10, dans lequel le processeur (505) est en outre configuré pour amener l'UE (105) à :
mesurer la qualité de liaison radio d'une ressource de détection de défaillance de faisceau dans les ressources respectives de l'au moins un ensemble de ressources de détection de défaillance de faisceau ;
dans le cas où la qualité de liaison radio de chaque ressource de détection de défaillance de faisceau dans les ressources respectives de l'au moins un ensemble de ressources de détection de défaillance de faisceau est inférieure à un premier seuil, mesurer la qualité de liaison radio de chaque ressource candidate dans l'ensemble associé de ressources candidates,
et éventuellement:
dans le cas où la qualité de liaison radio de chaque ressource de détection de défaillance de faisceau dans les ressources respectives de l'au moins un ensemble de ressources de détection de défaillance de faisceau est inférieure au premier seuil et où la qualité de liaison radio pour l'unique ressource candidate dans l'ensemble associé de ressources candidates est supérieure ou égale à un second seuil, transmettre la ressource de canal d'accès physique aléatoire associée à l'unique ressource candidate dans l'ensemble associé de ressources candidates.

13. Processeur (505) pour la communication sans fil par un équipement utilisateur, UE (105), pour la reprise sur défaillance de faisceau dans un environnement de transmission multi-TRP, le processeur (505) étant configuré pour amener l'UE (105) à :
recevoir (202) des informations de configuration indiquant au moins un ensemble de ressources de détection de défaillance de faisceau et au moins un ensemble de ressources candidates associées à un TRP (103) respectif, dans lequel les ressources respectives de l'au moins un ensemble de ressources de détection de défaillance de faisceau sont associées aux ressources respectives de l'au moins un ensemble de ressources candidates ; et
transmettre (204) une ressource de canal d'accès physique aléatoire pour indiquer une ressource candidate, dans lequel la ressource de canal d'accès physique aléatoire est associée à la ressource candidate dans l'au moins un ensemble de ressources candidates.

14. Procédé réalisé par un point d'émission-réception, TRP (103), pour la reprise sur défaillance de faisceau dans un environnement de transmission multi-TRP, le procédé comprenant :
la transmission d'informations de configuration indiquant au moins un ensemble de ressources de détection de défaillance de faisceau et au moins un ensemble de ressources candidates associées au TRP (103), dans lequel les ressources respectives de l'au moins un ensemble de ressources de détection de défaillance de faisceau sont associées aux ressources respectives de l'ensemble au moins de ressources candidates ; et
la réception d'une ressource de canal d'accès physique aléatoire pour indiquer une ressource candidate, dans lequel la ressource de canal d'accès physique aléatoire est associée à la ressource candidate dans l'au moins un ensemble de ressources candidates.

15. Procédé réalisé par un équipement d'utilisateur (105, 500), UE, pour la reprise sur défaillance de faisceau dans un environnement de transmission multi-TRP, le procédé comprenant :
la réception d'informations de configuration indiquant au moins un ensemble de ressources de détection de défaillance de faisceau et au moins un ensemble de ressources candidates associées à un TRP (103) respectif, dans lequel les ressources respectives de l'ensemble au moins de ressources de détection de défaillance de faisceau sont associées aux ressources respectives de l'au moins un ensemble de ressources candidates ; et
la transmission d'une ressource de canal d'accès physique aléatoire pour indiquer une ressource candidate, dans lequel la ressource de canal d'accès physique aléatoire est associée à la ressource candidate dans l'au moins un ensemble de ressources candidates.
